# EUROPEAN PATENT APPLICATION

(11) **EP 4 764 928 A1**
(43) Date of publication of application: **24.06.2026**
(21) Application number: 24222443.4
(22) Date of filing: 20.12.2024
(51) Int. Cl.: G06F 21/62, H04L 9/40

(54) **HANDLING OF SENSITIVE DATA IN A NETWORK HAVING MULTIPLE SECURITY ZONES**

(71) Applicant: Mastercard International Incorporated, Purchase, NY 10577 (US)
(72) Inventor: Le Callonnec, Sébastien, Greystones, Co. Wicklow (IE)
(74) Representative: Gill Jennings & Every LLP

(57) **Abstract**

A computer-implemented method is disclosed for handling sensitive data in a network comprising multiple security zones. The method includes sharing a data cleansing ruleset among a plurality of servers that are each within a respective security zone and using a multi-party cryptographic protocol that each of the plurality of servers participates in, to obtain a shared secret. Each server individually cleanses a respective dataset containing sensitive data using the data cleansing ruleset and then hashes the resulting cleansed dataset with a hash function using the shared secret as a salt. This produces a resultant dataset containing hashed representations of the original sensitive data, meaning that the dataset produced by each server can be collated to form a composite dataset without breaching data security requirements. A data operation can then be performed on the composite dataset.

## Description

### FIELD OF INVENTION

This invention relates to the handling of sensitive data in a network having multiple security zones, and more particularly to sharing sensitive data in a pseudonymous form in a network comprising multiple security zones across the boundaries of which sensitive data cannot cross in any form that enables recovery of the sensitive data in plaintext form.

### BACKGROUND

Data security is a growing concern as the world increasingly digitises. Sensitive data is often subject to data security requirements, meaning that sharing of sensitive data outside a security zone that the sensitive data is associated with is not permitted.

Large networks often contain many individual networks that are each within their own security zone. Sharing of sensitive data between such networks is therefore not possible due to data security constraints that require data to remain within the security zone in which it was originally collected.

However, it may be desirable to collate data across the large network for analysis purposes, as analysing the data collectively associated with the large network may reveal information or trends that cannot be obtained through multiple separate analyses performed within each of the various individual networks that together form the large network.

One area in which this occurs is in the case of a banking network. A banking network is made up of many individual banks connected together via payment rails, e.g. the payment rails provided by the Society for Worldwide Interbank Financial Telecommunication (SWIFT) or, increasingly, alternative payment rails built on blockchain technology. Each individual bank maintains a list of bank accounts (or, in the case of blockchain rails, digital asset wallet addresses) that are associated with other banks in the banking network and which are suspected of, or known to be, associated with fraud.

Each list maintained by the respective bank is considered to be sensitive data and is thus subject to data security requirements. This prevents individual banks from sharing this information with other banks as data security restrictions mean that the list maintained by each bank must remain within the security zone of that bank. This means that an analysis of the collective set of bank accounts that are suspected of fraud cannot being performed, because such an analysis requires all of the sensitive data generated by each bank to be collated together which breaches data security requirements. This type of analysis is desirable because it can reveal information about fraud within the banking network as a whole, where this information is not determinable by each individual bank due to the fact that each bank only has a piece of the overall picture.

There is thus a need to provide a mechanism for enabling handling of sensitive data at a large scale whilst also respecting data security requirements of said sensitive data.

### SUMMARY OF THE INVENTION

A computer-implemented method is disclosed for handling sensitive data in a network comprising multiple security zones. The method includes sharing a data cleansing ruleset among a plurality of servers that are each within a respective security zone and using a multi-party cryptographic protocol that each of the plurality of servers participates in, to obtain a shared secret. Each server individually cleanses a respective dataset containing sensitive data using the data cleansing ruleset and then hashes the resulting cleansed dataset with a hash function using the shared secret as a salt. This produces a resultant dataset containing hashed representations of the original sensitive data, meaning that the dataset produced by each server can be collated to form a composite dataset without breaching data security requirements. A data operation can then be performed on the composite dataset.

In a first aspect, the invention provides a computer-implemented method for handling sensitive data in a network comprising multiple security zones, the method comprising: obtaining, by a first server in a first security zone, a data cleansing ruleset; obtaining, by a second server in a second security zone, the data cleansing ruleset; using, by the first server and the second server, a multi-party cryptographic protocol to obtain a shared secret accessible to both the first server and the second server; obtaining, by the first server, a first dataset comprising first sensitive data stored in plaintext; performing, by the first server, a data cleansing operation on the first sensitive data to obtain cleansed first sensitive data, the data cleansing operation using the data cleansing ruleset; performing, by the first server, a hash operation on the cleansed first sensitive data to generate a second dataset including a hashed representation of the cleansed first sensitive data, the hash operation using a hash function with the shared secret as a salt; transmitting, by the first server, the second dataset to a central server that is outside the first security zone and outside the second security zone; obtaining, by the second server, a third dataset comprising second sensitive data stored in plaintext; performing, by the second server, a data cleansing operation on the second sensitive data to obtain cleansed second sensitive data, the data cleansing operation using the data cleansing ruleset; performing, by the second server, a hash operation on the cleansed second sensitive data to generate a fourth dataset including a hashed representation of the cleansed second sensitive data, the hash operation using the hash function with the shared secret as a salt; and transmitting, by the second server, the fourth dataset to the central server.

In a second aspect, the invention provides a computer-implemented method for handling sensitive data in a multi-security zone network, comprising: receiving, by a central server in a first security zone, a first dataset from a first server in a second security zone, the first dataset comprising a hashed representation of cleansed first sensitive data; receiving, by the central server, a second dataset from a second server in a third security zone, the second dataset comprising a hashed representation of cleansed second sensitive data; and performing, by the central server, a data operation, the data operation operating on the hashed representation of the cleansed first sensitive data and the hashed representation of the cleansed second sensitive data.

In a third aspect, the invention provides a system comprising a first server, a second server and a central server, the system configured to perform the method of the first aspect.

In a fourth aspect, the invention provides a central server configured to perform the method of the second aspect.

In a fifth aspect, the invention provides a computer-readable medium comprising instructions which, when executed by a processor, cause the processor to perform the method of the second aspect.

Further preferred features of the invention are set out in the appended dependent claims.

### BRIEF DESCRIPTION OF THE DRAWINGS

Figure 1 is a schematic drawing of a system according to an embodiment.
Figures 2A and 2B are flow charts depicting steps of a computer-implemented method according to an embodiment.
Figure 3 is a flow chart depicting steps of another computer-implemented method according to an embodiment.
Figure 4 is a schematic drawing of another system according to an embodiment.

### DETAILED DESCRIPTION OF EMBODIMENTS

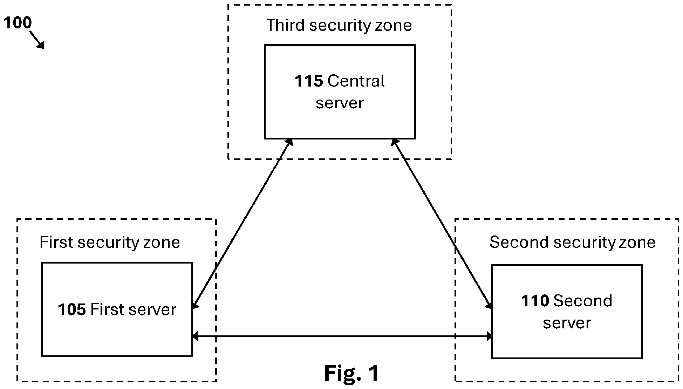

A system 100 according to an embodiment is shown in Fig. 1. System 100 comprises a first server 105, a second server 110 and a central server 115. Each server is communicatively coupled to the other servers via a communication channel provided by, for example, the Internet, a wide area network (WAN), local area network (LAN), a cellular network and the like. Data traffic between respective servers may be encrypted in part or in full and/or may be carried via a virtual private network (VPN) or similar. Such communication arrangements per se are known in the art and so further details are not provided here.

First server 105 is located in a first security zone, second server 110 is located in a second security zone and central server 115 is located in a third security zone, each shown with dashed lines in Fig. 1. Here, 'located' refers to a network location rather than a physical location, although it may be the case that network location is related to physical location.

A security zone is a zone in which network components have a common level of data security permission. This means that network components within a particular security zone are free to share sensitive data between one another in plaintext form but cannot share sensitive data with network components outside their security zone.

System 100 thus forms a network comprising multiple security zones because system 100 comprises three security zones. It will be appreciated that system 100 is not limited to three security zones and can comprise more security zones.

Sensitive data refers to data that has an associated data security requirement that constrains the dissemination of the sensitive data. Specifically, sensitive data can be disseminated in plaintext form only to network devices within a security zone that is associated with the sensitive data. Sensitive data cannot leave a security zone that it is associated with in plaintext form, nor can sensitive data leave a security zone it is associated with in a form that can be recovered to plaintext form by an entity outside the security zone, e.g. a ciphertext form that is decryptable or otherwise recoverable to plaintext by an entity outside of the security zone.

While Fig. 1 shows only a single server in each security zone, this is for clarity of illustration only as it will be appreciated that any number of network components such as other servers, switches, routers, user devices and the like may be within the respective security zone.

The first security zone, second security zone and third security zone are different from one another. As discussed above, the significance of this in the context of the invention is that sensitive data that is within the first security zone must not ever be available to any device that is not part of the first security zone (e.g. a device within the second security zone or third security zone) in plaintext form, or in a form that a device that is not within the first security zone can recover to plaintext form. This ensures that the data security requirement associated with the sensitive data is respected.

First server 105 has access to first sensitive data stored in plaintext form. The first sensitive data can be any type of data that has an associated data security requirement, e.g. personal details of an individual, a unique identifier of an electronic device (e.g. a MAC address) suspected of being used in connection with fraud, a social network handle or other such data that can uniquely identify an individual, a digital asset wallet address or private key, or an International Bank Account Number (IBAN). This list is not exhaustive and is simply intended to give perspective on the type of data that the invention can be applied to.

In the following description, the example of sensitive data being IBANs is used, but it will be appreciated from the above that this is not limiting on the scope of this disclosure.

Table 1 shows an example of the first sensitive data when stored in plaintext form, in the case where the first sensitive data comprises IBANs. As is known in the art, an IBAN is associated with a particular customer account at a particular branch of a specific bank.

**Table 1**

| IBAN | Bank Identifier |
|---|---|
| GB12ABCD12345678901234 | BANK0001 |
| GB09EFGH87654321 098765 | BANK0002 |

These exemplary IBANs conform to the following format: 22 characters in total, comprising from left to right, two characters identifying country of origin, two check digits, four characters from a bank code of the bank of origin, a six-digit bank sort code and an eight-digit bank account number.

In Table 1, each IBAN is stored in association with a bank identifier that uniquely identifies the bank that has flagged the corresponding IBAN as being associated with a bank account that is suspected as being, or known to have been, associated with fraud. This format shown in Table 1 is exemplary and not limiting on the scope of this disclosure. Alternatively, each IBAN may be present without any other data, i.e. without the bank identifier shown in Table 1. Additional data may also or alternatively be present. While only two records are shown in Table 1, it will be appreciated that any number of records, from one to any positive integer, can be present.

Banks maintain a list of IBANs associated with bank accounts managed by other banks that the bank suspects may be associated with fraudulent activities. While IBANs per se are not typically subject to data security requirements, a dataset comprising one or more IBANs suspected of being associated with fraud is subject to data security requirements. Specifically, it is forbidden by data security policy for a dataset comprising one or more IBANs suspected of fraud to be disseminated outside of a security zone that the bank compiling the dataset is within. This dataset thus comprises sensitive data, namely the set of one or more IBANs flagged as suspected of being associated with fraudulent activities by the bank.

Referring to Fig. 1, a first bank can reside within the first security zone of first server 105. The first bank can compile a first dataset of one or more IBANs associated with bank accounts maintained by other banks and which are suspected of being associated with fraud. The first bank can transmit the first dataset to first server 105, or otherwise make the first dataset available to first server 105. First server 105 may be part of the infrastructure of the first bank, or it may be outside of the infrastructure of the first bank. Whatever the configuration, the first bank and first server 105 are part of the first security zone meaning that exchange of the first dataset in plaintext form between them is permitted.

It will be appreciated that multiple banks may reside within the first security zone and may each compile a respective dataset of IBANs they suspect of being associated with fraud. In this case, first server 105 can receive each dataset from the respective bank and combine the datasets together to form the first dataset.

In this configuration, it may be desirable for the first server 105 to act as a local centralised server, meaning that none of the individual banks are able to access datasets provided by any other bank to first server 105. This can further increase data security as no bank obtains IBANs that any other bank regards as suspicious. First server 105 can provide an interface that enables one-way traffic from each bank to first server 105 to facilitate this, e.g. an interface that supports the HTTP/HTTPS POST method as is known in the art per se.

Each dataset may be transmitted by the respective bank to first server 105 within a file or other such wrapper. In this case, first server 105 can be configured to extract the dataset from the file or wrapper.

The security zone in the context of IBANs as sensitive data can be a jurisdiction, e.g. the borders of a country or region (e.g. the European Union). The invention is not limited to this, however, as the security zone can be bounded by any demarcation that indicates a change in data security permissions. In other contexts the security zone can be a perimeter of a local area network, a network perimeter of a particular organisation, a network permitter of a particular group or team within an organisation, and the like.

Second server 110 has access to second sensitive data stored in plaintext form. The discussion above in respect of the first sensitive data applies equally to the second sensitive data. The second sensitive data can thus also comprise one or more IBANs that have been flagged as potentially associated with fraudulent activities by a bank. The distinction of significance is that the second sensitive data is associated with the second security zone and thus cannot be shared with first server 105 in a form that enables first server 105 to recover the IBANs in plaintext.

There may be overlap between the first sensitive data and the second sensitive data, i.e. one or more IBANs may be part of both the first sensitive data and the second sensitive data. Discovering this overlap can be valuable as the fact that a particular IBAN has been flagged in more than one security zone as potentially being associated with fraud can increase a confidence in the likelihood that the IBAN is indeed associated with fraud. Related metrics of interest such as statistics relating to fraud can also be generated based on such information. However, this overlap cannot be discovered by directly comparing the first sensitive data and second sensitive data as doing so would require at least one of the sets of sensitive data to leave its respective security zone in a form that reveals the IBANs directly, breaching data security requirements.

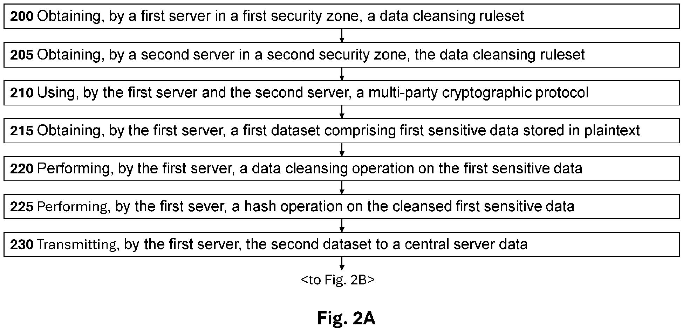

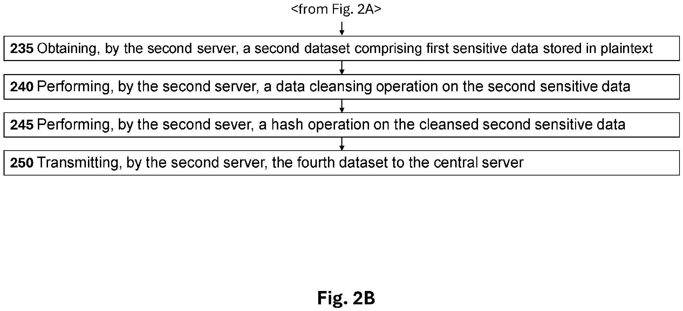

Figs. 2A and 2B illustrate a method according an embodiment that is performed by the components of system 100 to enable the handling of sensitive data in a network comprising multiple security zones.

In step 200, the first server 105 obtains a data cleansing ruleset. The data cleansing ruleset can be obtained from any location within system 100, e.g. from central server 115, or from storage local to first server 105 or storage local to second server 110. The data cleansing ruleset comprises one or more rules that specify how data cleansing is to be performed on sensitive data. Different data cleansing rulesets can be defined for different types of sensitive data.

In the case where the sensitive data comprises IBANs, the data cleansing rules can be any one or more of the following:
1) Remove any leading zeros from the IBAN.
2) Remove any non-alphanumeric characters from the IBAN.
3) Replace any lower-case character in the IBAN with its corresponding upper-case character.
4) If the IBAN is longer than 34 characters, remove any characters beyond the 34th character of the IBAN.
5) If the IBAN is shorter than 34 characters, zero pad the beginning of the IBAN, until it is 34 characters in length.

This data cleansing ruleset is provided purely to illustrate this concept and is not limiting on the scope of the invention. It will be appreciated that a data cleansing ruleset will be designed in dependence on the specifics of the sensitive data that is to be cleansed, perhaps with reference to typical formatting errors that occur in this type of sensitive data.

If appropriate, the data cleansing ruleset can be based on a relevant standard. Specifically, the data cleansing ruleset can be designed to cleanse any sensitive data that is not in accordance with the relevant standard such that the cleansed sensitive data is in accordance with the relevant standard. An example of a relevant standard is the ISO13616 standard in the case of IBANs.

A data cleansing ruleset can include conditional statements (i.e. if X then Y) and/or other instructions such as an order in which rules should be performed and/or instructions to skip a particular rule when a certain condition is met and/or to perform a particular rule multiple times when a certain condition is met. The data cleansing ruleset can be specified in any suitable format, e.g. XML format.

The purpose of the data cleansing ruleset is to ensure that the sensitive data is stored in a common, consistent format by each of servers 105, 110 before being hashed (see step 225). This is because hash functions, by design, provide significantly different outputs for inputs that vary only slightly, e.g. inputs with a difference of only one character or digit. The same IBAN stored in a slightly different format, e.g. with a leading space in one instance and without the leading space in another, will thus produce a completely different hash if the IBAN format is not standardised before hashing using a ruleset.

It will be appreciated that no data cleansing ruleset is perfect, meaning that inevitably some instances of the same sensitive data stored in different formats within different datasets will not generate the same hash when operated on by the invention. The use of the data cleansing ruleset should thus be understood as reducing the occurrence of such instances relative to a case where no data cleansing is performed, rather than eliminating these occurrences entirely.

In step 205, second server 110 obtains the data cleansing ruleset. Second server 110 can obtain the data cleansing ruleset in the same manner as first server 105. First server 105 and second server 110 are thus both in possession of the same data cleansing ruleset. This ensures consistency between the data cleansing operations performed by first server 105 and second server 110, such that a given cleansed IBAN should have the same format whether cleansed by first server 105 or second server 110. This contributes towards first server 105 and second server 110 generating the same hash for a given (cleansed) IBAN as input.

In step 210, first server 105 and second server 110 use a multi-party cryptographic protocol to obtain a shared secret accessible to both first server 105 and second server 110. The multi-party cryptographic protocol can be any cryptographic protocol suitable for establishing a shared secret, e.g. multi-party Diffie-Hellman protocol as is known in the art. As the invention makes use of standard multi-party cryptographic protocols, further details of their operation are not provided here. It is sufficient to understand that, after using the multi-party cryptographic protocol, first server 105 and second server 110 each have access to a shared secret generated by the protocol.

The shared secret is preferably stored by first server 105 on a device within the first security zone, e.g. within a secure element or similar secure storage medium accessible to first server 105 and within the first security zone. The shared secret is also preferably stored by second server 110 on a device within the second security zone, e.g. within a secure element or similar secure storage medium accessible to second server 110 and within the second security zone.

It should be noted that central server 115 does not participate in the multi-party cryptographic protocol instance used by first server 105 and second server 110 to generate the shared secret. This means that central server 115 has no knowledge of the intermediate values used to generate the shared secret, e.g. elliptic curve public-private key pair in the case of the Diffie-Hellman protocol. Central server 115 also has no knowledge of the shared secret itself. This prevents the central server 115 from having a mechanism by which, in theory at least, recovery of the sensitive data from a hashed representation of the sensitive data would be possible.

In step 215, first server 105 obtains a first dataset comprising first sensitive data stored in plaintext form. The first sensitive data can be of the type discussed above, e.g. IBANs of the form shown in Table 1. First server 105 can obtain the first dataset from another entity within the first security zone, e.g. an electronic device associated with a particular bank. In some instances the first dataset is formed from multiple datasets each containing sensitive data stored in plaintext, e.g. one dataset from each of a set of banks within the first security zone.

In step 220, first server 105 performs a data cleansing operation on the first sensitive data to obtain cleansed first sensitive data. The data cleansing operation uses the data cleansing ruleset obtained in step 200. Techniques for performing data cleansing are known to the skilled person and so further details are not provided here.

In step 225, first server 105 performs a hash operation on the cleansed first sensitive data to generate a second dataset including a hashed representation of the cleansed first sensitive data. The hash operation uses a hash function that takes the sensitive data as input and uses the shared secret as a salt. Hash operations per se are known in the art and therefore further details on the hashing process itself are not provided here. The hash function used can be any known to the skilled person, e.g. SHA-256.

The second dataset can be generated by applying the hash function to each piece of cleansed first sensitive data in turn. Thus, in the case of Table 1, the hash function would be applied to each IBAN in the `IBAN' column in turn, with each application using the same shared secret as a salt.

Table 2 shows an example second dataset generated in step 225 using the dataset shown in Table 1 as input. This second dataset includes hashed IBANs obtained by applying the SHA-256 hash algorithm to the IBANs from Table 1 using a shared secret 'SECRET01' as a salt. This second dataset is purely to illustrate the concept at hand and is not limiting on the scope of this invention. Hash algorithms other than SHA-256 can be used instead.

**Table 2**

| **Hashed IBAN** | **Bank Identifier** |
|---|---|
| 8ce2eb6c92ac66d4ed43d1ff11e3839f56d00319b30a39772 9578b4a65a36372 | BANK0001 |
| 8c52349861bc6905cb47dd4e7a3d9fe54af625394bc1970ff e19b881d69ffdfd | BANK0002 |

The bank identifiers have not been hashed as this data is not subject to data security restrictions and can therefore be disseminated outside of the first security zone without issue. Thus, the hashing of step 225 need only be applied to cleansed first sensitive data; any non-sensitive data present in the first dataset can be retained in plaintext form, or removed if preferred. It will be appreciated that if the bank identifier (or any other data stored in association with the IBAN) is sensitive data, the same hashing technique described in connection with the IBAN can be applied to this data.

The second dataset can be generated by creating a copy of the first dataset and systematically replacing the sensitive data in the copy of the first dataset with the corresponding hash of the sensitive data. Alternatively the hash of each piece of sensitive data can be appended to the first dataset and then the sensitive data removed once all piece of sensitive data have been hashed. These techniques are purely exemplary and other techniques for creating the second dataset will be apparent to a skilled person having the benefit of the present disclosure.

In step 230, first server 105 transmits the second dataset to central server 115. As shown in Fig. 1, central server 115 is within the third security zone, i.e. outside the first security zone of first server 105 and also outside the second security zone. As central server 115 was not a participant in the multi-party cryptographic protocol instance of step 210, central server 115 does not have access to the shared secret. This means that central server 115 does not have any means to attempt to recover the sensitive data (plaintext IBANs) from the hashed IBANs that central server 115 receives from first server 105. The data security of the sensitive data (plaintext IBANs) is thus maintained despite central server 115 being outside of the first security zone.

First server 105 may transmit the second dataset to central server 115 via a secure communication channel of the type known per se in the art. This can be advantageous in the case where the second dataset contains plaintext data that is not sensitive data but should still remain unreadable by unauthorised third parties, e.g. a party eavesdropping on the communication channel between first server 105 and central server 115.

In step 235, second server 110 obtains a second dataset comprising second sensitive data stored in plaintext. The second sensitive data can be of the type discussed above and shown in Table 1, for example. Second server 110 can obtain the second dataset from another entity within the second security zone, e.g. an electronic device associated with a particular bank. In some instances the second dataset is formed from multiple datasets each containing sensitive data stored in plaintext, e.g. one dataset from each of a set of banks within the second security zone.

The second dataset may contain some or all of the first sensitive data that is present in the first dataset. That is, there may be at least some overlap between the first sensitive data and the second sensitive data. Alternatively, there may be no overlap between the first sensitive data and the second sensitive data. Table 3 below shows a partial overlap situation, where one piece of sensitive data (shown in bold) in the second dataset is the same as a corresponding piece of sensitive data in the first dataset.

**Table 3**

| **IBAN** | **Bank Identifier** |
|---|---|
| GB67HIJK45678901234567 | BANK0003 |
| **GB09EFGH87654321098765** | BANK0004 |

This duplication of an IBAN indicates that a different bank has flagged the same IBAN as potentially or actually being associated with fraud. Specifically, in this example both BANK0002 and BANK00004 have flagged the IBAN in bold in Table 3 as potentially or actually being associated with fraud.

In step 240, second server 110 performs a data cleansing operation on the second sensitive data to obtain cleansed second sensitive data. The data cleansing operation uses the data cleansing ruleset obtained in step 200. This is the same data cleansing ruleset as used by first server 105 in step 220. Techniques for performing data cleansing are known to the skilled person and so further details are not provided here.

In step 245, second server 110 performs a hash operation on the cleansed second sensitive data to generate a fourth dataset including a hashed representation of the cleansed second sensitive data. The hash operation using the hash function with the shared secret as a salt. The hash function and salt used by second server 110 are the same as the hash function and salt used by first server 105 in step 225.

It will be appreciated that the combination of the cleansing process using common cleansing rules and the first and second servers 105, 110 using the same hash function and same shared secret as a salt makes it likely that a given IBAN will cause each server to generate the same hash as an output. This allows central server 115 to perform data operations such as an intersect operation on the hashed IBANs to generate useful information as an output without breaching data security requirements.

Table 4 below shows an example fourth dataset generated in step 245. This fourth dataset includes hashed IBANs obtained by applying the SHA-256 algorithm to the IBANs from Table 3 using a shared secret 'SECRET01' as a salt. This fourth dataset is purely to illustrate the concept at hand and is not limiting on the scope of this invention. Table 4 shows a partial overlap situation, where one piece of sensitive data (shown in bold) in the second dataset is the same as corresponding sensitive data in the first dataset.

**Table 4**

| **Hashed IBAN** | **Bank Identifier** |
|---|---|
| 431977e989b1ea8ff33540208664d5c2b0efd0f586b303931 c6d721eb5ff2996 | BANK0003 |
| **8c52349861bc6905cb47dd4e7a3d9fe54af625394bc1970f fe19b881d69ffdfd** | BANK0002 |

As can be seen, the hash of the common piece of sensitive data is the same as the hash shown in the final row of Table 2. This results from the use of the same data cleansing ruleset, the same hash function and same shared secret as a salt.

In step 250, second server 110 transmits the fourth dataset to central server 115. This step mirrors step 230 and reference is therefore made to the discussed above in connection with step 230.

After step 250 has been completed, central server 115 now has access to both the second dataset and the fourth dataset, i.e. to the hashed representation of the cleansed first sensitive data and the hashed representation of the cleansed second sensitive data. This allows the central server 115 to perform a data operation on the hashed representation of the cleansed first sensitive data and the hashed representation of the cleansed second sensitive data. The data operation could be, for example, an intersect operation that enables the number of pieces of sensitive data common to both the second dataset and the fourth dataset to be determined.

For example, an intersect operation performed using Table 2 and Table 4 would produce a resulting dataset containing one entry, namely the hashed IBAN shown in the final row of each of Table 2 and Table 4. Central server 115 is therefore able to identify that two banks consider the IBAN associated with the hashed IBAN shown in the final row of Table 2 and Table 4 as potentially associated with fraud. This can enable central server 115 to provide useful information such as the level of necessity for implementing a cross-jurisdiction fraud intelligence service or statistical metrics relating to inter-jurisdictional fraud whilst fully respecting the data security requirements of the first sensitive data and second sensitive data.

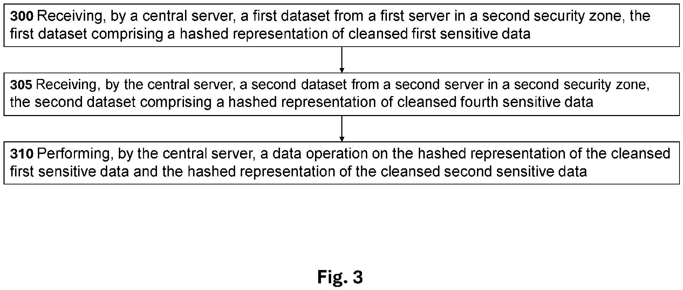

Fig. 3 shows a method according to another embodiment. The method of Fig. 3 is performed by central server 115.

In step 300, central server 115 receives a first dataset from first server 105. The first dataset comprises a hashed representation of cleansed first sensitive data. The first dataset can be the second dataset generated in step 225 in the manner described above.

In step 305, central server 115 receives a second dataset from second server 110. The second dataset comprises a hashed representation of cleansed second sensitive data. The second dataset can be the fourth dataset generated in step 245 in the manner described above.

In step 310, central server 115 performs a data operation on the hashed representation of the cleansed first sensitive data and the hashed representation of the cleansed second sensitive data. The data operation can be, for example, an intersect operation.

The method of Fig. 3 enables central server 115 to perform one or more data operations on hashed representations of sensitive data, such that data security is maintained whilst also enabling central server 115 to determine one or more pieces of information about the sensitive data. For example, in the case where the data operation is an intersect operation, central server 115 can determine a number of pieces of data that are common within the first sensitive data and second sensitive data. This information can be valuable, e.g. in the case of the sensitive data being IBANs, it can be determined how many IBANs are thought to be associated with fraud by more than one bank.

The data operation performed in step 310 is not limited to a single operation. A combination of multiple operations can be performed. For example, the data operation can comprise a deduplication operation followed by a count operation. This combination of operations determines the number of unique items of sensitive data collectively within the first sensitive data and second sensitive data. This information can represent a total number of bank accounts suspected of fraud at a particular time, such that if the method of Fig. 3 is performed periodically (e.g. daily, weekly, monthly, quarterly), statistics on the prevalence of fraud across multiple security zones over time can be generated whilst maintaining data security.

Another example of a possible combination of multiple data operations is a set of intersect operations that can be used to identify the frequency of overlap between pairs of datasets. In this case, three or more datasets each containing hashed representations of sensitive data are available to central server 115, where each dataset is generated in accordance with an embodiment described herein. Each dataset could correspond to a different security zone, or the same security zone at a different time, or a group of security zones at different times. Multiple intersect operations can be performed, each on a different pair of datasets from the set of three or more datasets. Each intersect operation indicates the amount of overlap between the pair of datasets that the intersect operation is performed on, enabling the frequency of overlap of each pair of datasets to be determined. This information may be useful in activities such as fraud monitoring and fraud prevention.

It will be appreciated that the invention is not restricted to only two servers with respective security zones. The invention is in fact applicable to any number of servers with respective security zones.

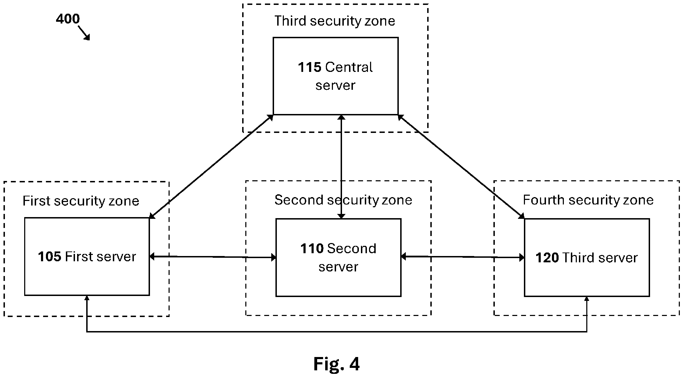

Fig. 4 shows a system 400 according to another embodiment. System 400 is the same as system 100 other than that system 400 includes a third server 120 located in a fourth security zone.

Third server 120 is the same as first server 105 and second server 110 in constructional details and reference is made to the discussion above in this regard. The difference of significance to this discussion is that third server 120 is located in the fourth security zone, i.e. third server 120 is in a different security zone to first server 105 and second server 110.

Third server 120 can obtain the data cleansing ruleset. That is, third server 120 performs an equivalent of step 200 to obtain the data cleansing ruleset, e.g. from central server 115.

Third server 120 can participate in a multi-party cryptographic protocol instance as described above in connection with step 210. In this case, step 210 is modified to comprise: using, by first server 105, second server 110 and third server 120, the multi-party cryptographic protocol to obtain the shared secret. In this variant, each of first server 105, second server 110 and third server 120 are in possession of the shared secret after completing the multi-party cryptographic protocol. Third server 120 can store the shared secret on a storage device within the third security zone.

Third server 120 can obtain a fifth dataset comprising third sensitive data stored in plaintext. The third sensitive data can comprise one or more IBANs. Reference is made to the discussion above in connection with steps 215 and 235, which discussion applies equally to third server obtaining a fifth dataset. The fifth dataset may have one or more pieces of sensitive data that are common with the first dataset and/or third dataset. The fifth dataset may have no pieces of sensitive data that are common with the first dataset and/or third dataset.

Third server 120 can perform a data cleansing operation on the third sensitive data to obtain cleansed third sensitive data. The data cleansing operation makes use of the data cleansing ruleset obtained by third server 120. Reference is made to the discussion above in connection with steps 220 and 240, which discussion applies equally to third server 120 performing data cleansing.

Third server 120 can perform a hash operation on the cleansed third sensitive data to generate a sixth dataset including a hashed representation of the cleansed third sensitive data, the hash operation using the hash function with the shared secret as a salt. Reference is made to the discussion above in connection with steps 225 and 245, which discussion applies equally to third server 120 performing a hash operation.

Third server 120 can transmit the sixth dataset to central server 115. Reference is made to the discussion above in connection with steps 230 and 250, which discussion applies equally to third server 120 transmitting the sixth dataset.

At this point, central server 115 has access to the second dataset, fourth dataset and sixth dataset, i.e. to a hashed representation of the cleansed first sensitive data, a hashed representation of the cleansed second sensitive data and a hashed representation of the cleansed third sensitive data. This allows the central server 115 to perform a data operation on the hashed representation of the cleansed first sensitive data, the hashed representation of the cleansed second sensitive data and the hashed representation of the third sensitive data. The data operation could be, for example, an intersect operation as discussed above that in this case enables the number of pieces of sensitive data common to the second dataset, fourth dataset and sixth dataset to be determined whilst respecting data security requirements.

It will be appreciated from the above discussion that the invention can be scaled to any number of servers located in any number of respective security zones. Each of a plurality of servers obtains the data cleansing ruleset and participates in a multi-party cryptographic protocol instance to obtain a shared secret. Each of the plurality of servers can then individually perform steps 215 to 230 of Fig. 2A on a respective dataset comprising sensitive data, to enable central server 115 to obtain hashed representations of all the cleansed datasets. Central server 115 can then perform a data operation on all of the hashed representation of all the cleansed datasets, e.g. an intersect operation to identify sensitive data common to two or more of the original datasets.

It is possible to add a new server to a group of servers already performing an embodiment of the invention. In this case, the new server obtains the data cleansing ruleset and then advertises its presence to the other servers in the group. All the servers in the group, plus the new server, then participate in a new multi-party cryptographic protocol instance to obtain a new shared secret. This new shared secret can then be used in the now expanded group of servers to implement embodiments of the invention.

It will be appreciated that the embodiments described above in method form can be encoded in a computer-readable format, such as a set of instructions stored on a computer readable medium. When the instructions are executed by a processor, the processor performs the method of the respective embodiment. The computer readable medium may be a non-transitory computer readable medium. Multiple processors may execute a respective part of the instructions to perform the corresponding part of the method according to the respective embodiment above.

It will also be appreciated that the embodiments described herein are purely illustrative and hence are susceptible to many modifications, substitutions, additions and the like. All such modifications, substitutions and additions are within the scope of the invention which is defined by the appended claims. Method steps described in this specification may be implemented in any order, in parallel or sequentially, unless specifically stated otherwise.

## Claims

1. A computer-implemented method for handling sensitive data in a network comprising multiple security zones, the method comprising:
obtaining, by a first server in a first security zone, a data cleansing ruleset;
obtaining, by a second server in a second security zone, the data cleansing ruleset;
using, by the first server and the second server, a multi-party cryptographic protocol to obtain a shared secret accessible to both the first server and the second server;
obtaining, by the first server, a first dataset comprising first sensitive data stored in plaintext;
performing, by the first server, a data cleansing operation on the first sensitive data to obtain cleansed first sensitive data, the data cleansing operation using the data cleansing ruleset;
performing, by the first server, a hash operation on the cleansed first sensitive data to generate a second dataset including a hashed representation of the cleansed first sensitive data, the hash operation using a hash function with the shared secret as a salt;
transmitting, by the first server, the second dataset to a central server that is outside the first security zone and outside the second security zone;
obtaining, by the second server, a third dataset comprising second sensitive data stored in plaintext;
performing, by the second server, a data cleansing operation on the second sensitive data to obtain cleansed second sensitive data, the data cleansing operation using the data cleansing ruleset;
performing, by the second server, a hash operation on the cleansed second sensitive data to generate a fourth dataset including a hashed representation of the cleansed second sensitive data, the hash operation using the hash function with the shared secret as a salt; and
transmitting, by the second server, the fourth dataset to the central server.

2. The computer-implemented method of claim 1, further comprising:
performing, by the central server, a data operation, the data operation operating on the hashed representation of the cleansed first sensitive data and the hashed representation of the cleansed second sensitive data.

3. The computer-implemented method of claim 1, further comprising:
obtaining, by a third server in a fourth security zone, the data cleansing ruleset;
using, by the third server, the multi-party cryptographic protocol to obtain the shared secret;
obtaining, by the third server, a fifth dataset comprising third sensitive data stored in plaintext;
performing, by the third server, a data cleansing operation on the third sensitive data to obtain cleansed third sensitive data, the data cleansing operation using the data cleansing ruleset;
performing, by the third server, a hash operation on the cleansed third sensitive data to generate a sixth dataset including a hashed representation of the cleansed third sensitive data, the hash operation using the hash function with the shared secret as a salt; and
transmitting, by the third server, the sixth dataset to the central server.

4. The computer-implemented method of claim 3, further comprising:
performing, by the central server, a data operation, the data operation operating on the hashed representation of the cleansed first sensitive data, the hashed representation of the cleansed second sensitive data and the hashed representation of the cleansed third sensitive data.

5. The computer-implemented method of claim 2 or claim 4, where the data operation is an intersect operation.

6. The computer-implemented method of any one of claims 3, 4 or 5, further comprising:
storing, by the first server, the shared secret on a storage device within the first security zone;
storing, by the second server, the shared secret on a storage device within the second security zone; and
storing, by the third server, the shared secret on a storage device within the fourth security zone.

7. The computer-implemented method of any one of claims 3 to 6, wherein the first sensitive data, the second sensitive data and the third sensitive data each comprise one or more International Bank Account Numbers, IBANs.

8. A computer-implemented method for handling sensitive data in a multi-security zone network, comprising:
receiving, by a central server in a first security zone, a first dataset from a first server in a second security zone, the first dataset comprising a hashed representation of cleansed first sensitive data;
receiving, by the central server, a second dataset from a second server in a third security zone, the second dataset comprising a hashed representation of cleansed second sensitive data; and
performing, by the central server, a data operation, the data operation operating on the hashed representation of the cleansed first sensitive data and the hashed representation of the cleansed second sensitive data.

9. The computer-implemented method of claim 8, further comprising:
receiving, by the central server, a third dataset from a third server in a fourth security zone, the third dataset comprising a hashed representation of cleansed third sensitive data;
wherein the data operation operates on the hashed representation of the cleansed first sensitive data, the hashed representation of the cleansed second sensitive data and the hashed representation of the cleansed third sensitive data.

10. The computer-implemented method of claim 8 or claim 9, wherein the data operation is an intersect operation.

11. The computer-implemented method of claim 9 or claim 10 when dependent on claim 9, wherein the hashed representation of the cleansed first sensitive data, the hashed representation of the cleansed second sensitive data and the hashed representation of the cleansed third sensitive data each comprise hashed representations of one or more International Bank Account Numbers, IBANs.

12. A system comprising a first server, a second server and a central server, the system configured to perform the method of claim 1 or claim 2.

13. The system of claim 12, further comprising a third server, the system configured to perform the method of any one of claims 3 to 7.

14. A central server configured to perform the method of any one of claims 8 to 11.

15. A computer-readable medium comprising instructions which, when executed by a processor, cause the processor to perform the method of any one of claims 8 to 11.
